# EUROPÄISCHE PATENTSCHRIFT

(11) **EP 4 045 806 B1**
(45) Veröffentlichungstag und Bekanntmachung des Hinweises auf die Patenterteilung: **26.03.2025**
(21) Anmeldenummer: 20800792.2
(22) Anmeldetag: 12.10.2020
(51) Int. Cl.: F16D 3/62

(54) **KUPPLUNG**
COUPLING
EMBRAYAGE

(30) Priorität: 15.10.2019 DE 102019127763
(43) Veröffentlichungstag der Anmeldung: 24.08.2022
(73) Patentinhaber: Hackforth GmbH, 44653 Herne (DE)
(72) Erfinder: TRÖSTER, Oliver, 44649 Herne (DE); GÖDECKE, Gunnar, 58313 Herdecke (DE)
(74) Vertreter: Schneiders & Behrendt Bochum
(86) Internationale Anmeldenummer: PCT/EP2020/078632
(87) Internationale Veröffentlichungsnummer: WO 2021/074083

(56) Entgegenhaltungen:
- EP-A1- 0 035 283
- DE-A1- 2 752 445
- DE-C1- 19 515 101
- DE-C2- 2 752 445
- FR-A- 745 135
- JP-A- S6 357 923
- US-A1- 2018 172 101

## Beschreibung

Die Erfindung betrifft eine Kupplung mit mindestens einem ersten Kupplungselement, mindestens einem zweiten Kupplungselement, mehreren Verbindungsstücken, und mehreren elastischen Gelenkbuchsen, wobei zur Verbindung der Kupplungselemente jeweils mindestens ein Verbindungsstück und mindestens eine Gelenkbuchse hintereinander gekoppelt zwischen den Kupplungselementen angeordnet sind, sodass mindestens eine Gelenkbuchse ein elastisches Verbundlagerelement zwischen dem Verbindungsstück und mindestens einem Kupplungselement bildet.

Eine solche Kupplung ist beispielsweise aus DE 42 05 666 C2 bekannt und dient in der Antriebstechnik als Ausgleichskupplung, die zwei Wellen drehsteif und versatzausgleichend miteinander verbindet. Diese Kupplungen dienen neben der Drehmomentübertragung zum Ausgleichen eines axialen, radialen und winkligen Versatzes und zum Ausgleichen von Verlagerungen zwischen den beiden über die Kupplungselemente angebundenen Wellen. Die in DE 42 05 666 C2 beschriebene Kupplung hat den Nachteil, dass jede Verlagerung der Kupplungselemente zueinander unter rein elastischer Verformung der undrehbar in den Verbindungsstücken gehaltenen Gelenkbuchsen erfolgt.

Die Verlagerung der Kupplungselemente ist hierdurch begrenzt und die Höhe der winkligen Verlagerung beansprucht die Gelenkbuchsen erheblich, was die Lebensdauer der Gelenkbuchsen überproportional verkürzt, da die Gelenkbuchsen bei jeder Umdrehung der Kupplung unter Verlagerung dynamisch wechselnd belastet werden. So zeigen elastische Gelenkbuchsen beim Überschreiten eines gewissen winkligen Verlagerungswertes einen überproportional schnellen Abfall der Lebensdauer.

DE 195 15 101 C1 offenbart eine Kupplung mit elastischen Laschen. Zudem werden dort Gelenkbuchsen, in Form von Hülsen offenbart, in denen ein Gummikörper angeordnet ist. Der Gummikörper dient dort dem Ausgleich herstellungsbedingter Toleranzen während der Montage, bei welcher Gewindebolzen in die Hülsen eingesetzt werden. Eine elastische Verformung der dort beschriebenen Gelenkbuchse bei Verlagerung der Kupplungselemente zueinander wird nicht offenbart.

DE 27 52 445 A1 offenbart Bandschlingen als Verbindungselemente, welche weitgehend unnachgiebig sind. Eine verbesserte Elastizität wird hierdurch vermieden.

FR 745 135 A offenbart Pleuelstangen, die in elastischen Gelenkbuchsen gelagert sind.

JP S63 57923 A offenbart eine Kupplung mit einem mehrschichtigen Körper, der in seiner Gesamtheit biegeelastisch ausgebildet. An den Körper sind die Kupplungselemente anvulkanisiert.

EP 0 035 283 A1 offenbart eine Kupplung mit elastischen Gelenkbuchsen, welche zur Verbindung der Kupplungselemente jeweils mit einem Lenker gekoppelt sind, sodass die Gelenkbuchsen ein elastisches Verbundlagerelement zwischen dem Lenker und einem Kupplungselement bilden. Eine tatsächliche Verformung der Lenker ist hier nicht beschrieben und auch nicht vorgesehen.

Es ist daher Aufgabe der Erfindung, eine verbesserte Kupplung anzugeben, die eine längere Lebensdauer der Komponenten bietet und eine größere Verlagerung der Kupplungselemente zueinander ermöglicht.

Gelöst wird diese Aufgabe durch eine Kupplung mit den Merkmalen des Anspruchs 1.

Die erfindungsgemäße Kupplung ist dadurch gekennzeichnet, dass das Verbindungsstück eine biegeelastische Lasche ist, wobei die Gelenkbuchse und die Lasche so ausgelegt sind, dass eine Verlagerung der beiden Kupplungselemente zueinander von der Lasche und der Gelenkbuchse aufgenommen wird. Dadurch, dass das Verbindungsstück eine biegeelastische Lasche ist und eine Verlagerung der beiden Kupplungselemente zueinander auf elastischen Verformungen von Lasche und Gelenkbuchse aufgeteilt wird, lässt sich die Lebensdauer der Kupplungskomponenten auch bei großen Verlagerungen der Kupplungselemente zueinander verlängern, da die Gelenkbuchsen weniger stark durch die Verlagerung belastet werden. Den Ausgleich der Verlagerungsbewegung auf die Gelenkbuchse und die biegeelastische Lasche aufzuteilen, senkt die Belastung der Gelenkbuchsen, da die Laschen einen Teil der Verlagerung ermöglichen. Die elastische Biegung der Laschen bei der Verlagerung der Kupplungselemente führt zu einer geringeren elastischen Verformung der Gelenkbuchsen, was die Lebensdauer dieser Komponenten überproportional ansteigen lässt. Da die biegeelastischen Laschen ebenfalls zur Verlagerung beitragen, reduziert sich der Winkel unter dem eine dynamische Belastung der Gelenkbuchsen erfolgt, was die möglichen Einsatzzeiten für die Gelenkbuchsen bei der dynamisch wechselnden Belastung unter einer winkligen Verlagerung verlängert. Somit wird eine erhöhte Lebensdauer bei gleichzeitig verbesserter Verlagerungsfähigkeit realisiert. Mit der Aufteilung der winkligen Verlagerung auf die beide in Reihe geschalteten Komponenten, also der elastischen Gelenkbuchse und der biegeelastischen Lasche, lässt sich die Beanspruchung für jede einzelne Komponente deutlich reduzieren und so die Lebensdauer erheblich steigern.

Vorteilhafte Ausgestaltungen und Weiterbildungen der Erfindung ergeben sich aus den abhängigen Ansprüchen. Es ist darauf hinzuweisen, dass die in den Ansprüchen einzeln aufgeführten Merkmale auch in beliebiger und technologisch sinnvoller Weise miteinander kombiniert werden können und somit weitere Ausgestaltungen der Erfindung aufzeigen.

Gemäß einer vorteilhaften Ausgestaltung der Erfindung ist vorgesehen, dass mindestens zwei Laschen und mindestens zwei Gelenkbuchsen hintereinander in Umfangsrichtung in vorbestimmten Winkelabständen in Bezug auf eine Mittelachse der Kupplung zwischen den Kupplungselementen angeordnet sind. Über die Anordnung mehrerer Laschen- und Gelenkbuchsen-Kombinationen in Umfangsrichtung in vorbestimmten Winkelabständen in Bezug auf eine Mittelachse der Kupplung können die Belastungen bei der Übertragung von größeren Drehmomenten auf mehrere Komponenten-Kombinationen aufgeteilt werden, sodass die in Reihe geschalteten Buchsen und Laschen von parallel arbeitenden Kombinationen unterstützt werden.

Besonders bevorzugt ist eine Ausführungsform, die vorsieht, dass zwischen einer Lasche und einem Kupplungselement jeweils eine Gelenkbuchse angeordnet ist. Bevorzugt bildet jeweils mindestens eine Gelenkbuchse ein elastisches Verbundlagerelement zwischen dem Verbindungsstück und jeweils einem Kupplungselement. In diesem Fall bilden die Gelenkbuchsen die Verbindung der Laschen zu den Kupplungselementen. Hierdurch kann eine winklige Verlagerung der Kupplungselemente zueinander über die Laschen und die verbindenden Gelenkbuchsen gemeinsam ausgeglichen werden. Hierzu sind die Laschen an ihren Enden jeweils mit einer elastischen Gelenkbuchse an die Kupplungselemente gekoppelt, sodass die Verlagerung auf die biegeelastische Lasche und die beiden mit ihr hintereinander gekoppelten elastischen Gelenkbuchsen aufgeteilt wird.

Eine besonders vorteilhafte Ausführung der Erfindung bezieht sich darauf, dass zwischen den Gelenkbuchsen mehrere Laschen angeordnet sind. Hierdurch lassen sich mehrere dünnere und somit biegeweichere Laschen parallel verwenden, statt relativ dicker und starrer Laschen. Damit können bei gleichbleibender Drehmomentkapazität die Nachgiebigkeit der Konstruktion zusätzlich erhöht werden und somit Reaktionskräfte minimiert werden.

Eine besonders vorteilhafte Ausführung der Erfindung sieht vor, dass die Gelenkbuchse sphärisch, konisch oder zylindrisch geformt ausgebildet ist. Die Gelenkbuchse kann als Gummibuchse ausgeführt sein. Bei diesen Gummibuchsen ist in der Regel ein Gummiteil in vorzugsweise metallischen Lagerhülsen stoffschlüssig aufgenommen. Hierdurch ergibt sich ein spielfreier Aufbau für die Gelenkbuchsen. Aufgrund dieses Aufbaus sind die Gelenkbuchsen wartungsfrei, da in der Gelenkbuchse kein tribologisches System mit gleitender Relativbewegung und coulombscher Reibung vorliegt, welches üblicherweise regelmäßige Wartung durch Schmierung benötigt und zudem einem Gleitverschleiß unterliegt. Außerdem führt die gummierte Verbindung der Lagerhülsen durch das dazwischen angeordnete Gummiteil zu einer akustischen Entkopplung zwischen den Lagerhülsen der Gelenkbuchse und so vorteilhafterweise auch zu einer akustischen Entkopplung zwischen den Kupplungselementen der Kupplung. Vorteilhafterweise weisen die Lagerhülsen und auch das dazwischen stoffschlüssig mit diesen verbundene Gummiteil eine sphärische, konische oder zylindrische Gestalt auf. Über die Form der Gelenkbuchse kann durch eine sphärische, konische oder zylindrische Gestalt die Belastung durch die Verlagerung anwendungsspezifisch auf die Laschen verteilt werden. Die als Gummibuchse ausgebildete Gelenkbuchse nimmt die Verlagerung der beiden Kupplungselemente zueinander zusammen mit der Lasche über eine Verformung des Gummiteils zwischen den Lagerhülsen der Gelenkbuchse auf.

In einer bevorzugten Ausgestaltung ist die Gelenkbuchse als sphärische Elastomerbuchse ausgebildet. Hierdurch kann die Verlagerung besonders gut zwischen den Gelenkbuchsen und der biegeelastischen Lasche aufgeteilt werden.

Weiterhin kann die Gelenkbuchse in einer vorteilhaften Ausführungsform ein elastisches, vorzugsweise gummielastisches, Gelenk bilden. Über ein solches elastisches Gelenk lässt sich die Verlagerung besonders einfach zwischen den Gelenkbuchsen und der biegeelastischen Lasche aufteilen.

Eine vorteilhafte Ausführung der Erfindung sieht vor, dass die Gelenkbuchse in eine Anschlussbuchse der Lasche integriert ist. Mit der Integration der innenliegenden Gelenkbuchse in die Anschlussbuchse der Lasche kann eine platzsparende Konstruktion realisiert werden, bei der die Kräfte weniger umgeleitet werden müssen.

Besonders vorteilhaft ist eine Ausführungsform, die vorsieht, dass die Gelenkbuchse über eine zapfenförmige Verbindung an eine Anschlussbuchse der Lasche angebunden ist. Über die zapfenförmige Verbindung werden die Kräfte zwischen der außenliegenden Gelenkbuchse und der Lasche übertragen, wobei die zapfenförmige Verbindung eine separate Anordnung von Gelenkbuchse und Lasche ermöglicht, was den Austausch einzelner Komponenten erleichtert.

Eine vorteilhafte Ausgestaltung sieht vor, dass die Lasche aus Federstahl, Kunststoff, faserverstärktem Kunststoff oder als textilverstärkte und/oder fadenverstärkte Elastomerlasche ausgeführt ist. Mit der Variation des Materials und der Geometrie der Lasche lässt sich die Längssteifigkeit des Verbindungsstücks anpassen. Die Quersteifigkeit des Verbindungsstücks, also die winkelige Steifigkeit lässt sich ebenfalls durch Wahl des Materials und der Geometrie der Lasche an den Anwendungsfall anpassen. Die Länge einer Lasche könnte zwischen 100 bis 300 mm betragen, wobei das Längen-Dicken-Verhältnis zwischen 10:1 und 3:1 liegen kann. Ein Längen-Dicken-Verhältnis von 3:1 ist sehr gut mit textilverstärkten und/oder fadenverstärkten Elastomerlaschen realisierbar. Für Laschen aus Federstahl, Kunststoff oder faserverstärktem Kunststoff sind größere Längen-Dicken-Verhältnisse möglich.

Gemäß einer bevorzugten Ausgestaltung der Erfindung ist vorgesehen, dass die Verlagerung der beiden Kupplungselemente zueinander zu im Wesentlichen gleichen Teilen auf die Lasche und die Gelenkbuchse aufgeteilt wird. Das bedeutet, dass die aus einer Verlagerung resultierenden Biegewinkel von Lasche und Gelenkbuchse nahezu gleich, jedenfalls aber in ähnlicher Größenordnung sind (z.B. liegt das Verhältnis der Biegewinkel von Lasche und Gelenkbuchse zwischen 0,5 und 2). Hierdurch ist die axiale Steifigkeit der Kupplung annährend zu gleichen Teilen aus der winkligen Verlagerung der Buchse und der Verformung der Lasche gegeben. Die winkelige Steifigkeit ist über eine Variation der Materialien und Geometrien der Laschen und Gelenkbuchsen einstellbar.

Die Aufteilung der Verlagerung der beiden Kupplungselemente zueinander auf die Laschen und die Gelenkbuchsen kann auch im Hinblick auf die Lebensdauer optimiert ausgelegt werden. Die Auslegung erfolgt dabei so, dass die Laschen und die Gelenkbuchsen der Kupplung idealerweise gleichzeitig versagen, sodass die Lebensdauer der Kupplungskomponenten insgesamt maximal ist. Mit der Aufteilung wird ein vorzeitiges Versagen der biegeelastischen Laschen bzw. der elastischen Gelenkbuchsen verhindert und so die Gesamtlebensdauert der Kupplung durch Abstimmung der Komponenten zur gemeinsamen Aufteilung der Verlagerung der beiden Kupplungselemente zueinander optimiert.

Weitere Merkmale, Einzelheiten und Vorteile der Erfindung ergeben sich aufgrund der nachfolgenden Beschreibung sowie anhand der Zeichnungen, die Ausführungsbeispiele der Erfindung zeigen. Einander entsprechende Gegenstände oder Elemente sind in allen Figuren mit den gleichen Bezugszeichen versehen. Es zeigen:
- Figur 1:: erfindungsgemäße Kupplung,
- Figur 2:: Detailansicht,
- Figur 3:: Draufsicht und
- Figur 4, 5, 6:: Verlagerungszustände.

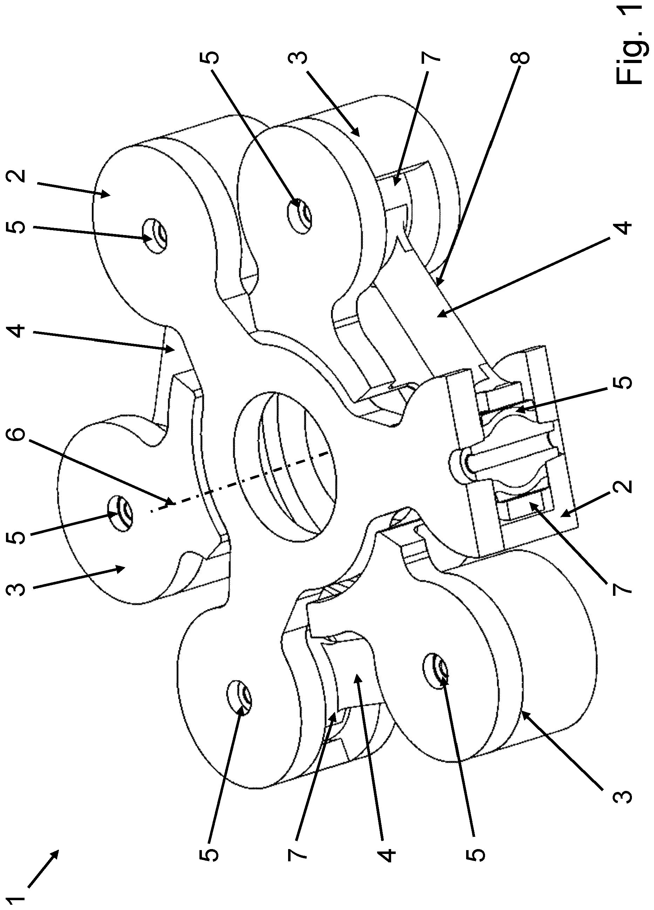

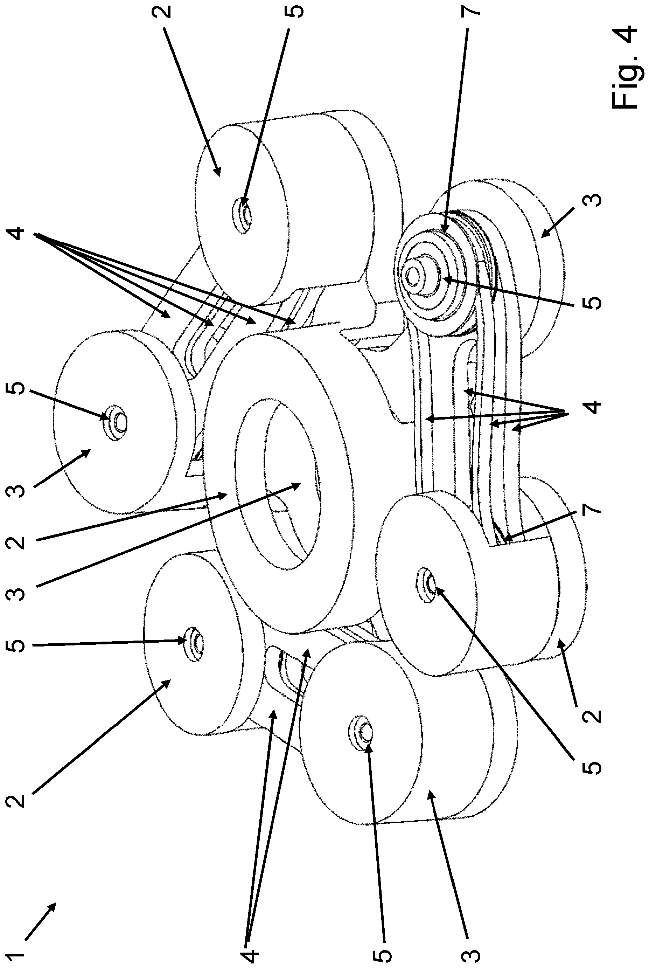

In der Figur 1 mit dem Bezugszeichen 1 bezeichnet ist eine erfindungsgemäße Kupplung dargestellt. Die Kupplung 1 umfasst ein erstes Kupplungselement 2, welches beispielsweise dem Antrieb zugeordnet sein kann und mit einer Antriebswelle gekoppelt ist. Außerdem umfasst die Kupplung 1 ein zweites Kupplungselement 3, welches mit einer Welle des Abtriebes gekoppelt sein kann. Zwischen den Kupplungselementen 2, 3 der Kupplung 1 sind mehrere Verbindungsstücke 4 und mehrere elastische Gelenkbuchsen 5 angeordnet. Zur Verbindung der Kupplungselemente 2, 3 sind jeweils eine erste Gelenkbuchse 5, ein Verbindungsstück 4 und eine zweite Gelenkbuchse 5 hintereinander gekoppelt zwischen den Kupplungselementen 2, 3 angeordnet. Die Gelenkbuchsen 5 bilden hierbei elastische Verbundlagerelemente zwischen dem Verbindungsstück 4 und den beiden hierüber verbundenen Kupplungselementen 2, 3. Vorteilhafterweise ist das Verbindungsstück 4 als eine biegeelastische, also biegeweiche Lasche 4 ausgebildet. Hierdurch wird eine (axiale und/oder winklige) Verlagerung der beiden Kupplungselemente 2, 3 zueinander auf die Lasche 4 und die gekoppelten Gelenkbuchsen 5 aufgeteilt. Dies verlängert die Lebensdauer der Kupplungskomponenten 4, 5 auch bei großen Verlagerungen der Kupplungselemente 2, 3 zueinander erheblich, da die Gelenkbuchsen 5 weniger stark durch die Verlagerung belastet werden. Die Aufteilung der Verlagerungsbewegung auf die Gelenkbuchsen 5 und die biegeelastische Lasche 4 senkt die Belastung der Gelenkbuchsen 5, da die Laschen 4 einen Teil der Verlagerungsbewegung zulassen. Über die elastische Biegung der Laschen 4 bei der Verlagerung der Kupplungselemente 2, 3 kann eine geringere elastische Verformung der Gelenkbuchsen 5 erreicht werden, was die Lebensdauer dieser Komponenten 5 überproportional ansteigen lässt. Mit dem Beitrag der biegeelastischen Laschen 4 zur Verlagerung der Kupplungselemente 2, 3 reduziert sich der Winkel, unter dem eine dynamische Belastung der Gelenkbuchsen 5 entsteht, wodurch die erreichbare Einsatzzeit bis zum Austausch der Gelenkbuchsen 5 erhöht werden kann. Außerdem kann über die biegeelastischen Laschen 4 die Verlagerungsfähigkeit der Kupplung 1 erhöht werden. Die Aufteilung der winkligen Verlagerung auf die beide in Reihe geschalteten elastischen Gelenkbuchsen 5 und die biegeelastische Lasche 4 reduziert die Beanspruchung für jede einzelne Komponente 4, 5 deutlich, sodass die Lebensdauer erheblich gesteigert werden kann. Wie zu erkennen ist, sind im Ausführungsbeispiel drei Laschen 4 mit insgesamt sechs Gelenkbuchsen 5 hintereinander in Umfangsrichtung in vorbestimmten Winkelabständen in Bezug auf die Mittelachse 6 der Kupplung 1 zwischen den Kupplungselementen 2, 3 angeordnet. Diese drei Laschen 4 übertragen das Drehmoment zwischen dem ersten Kupplungselement 2 und dem zweiten Kupplungselement 3, wobei die Laschen 4 zusammen mit den Gelenkbuchsen 5 die Verlagerung der Kupplungselemente 2, 3 zueinander aufteilen und den Versatz (siehe Figur 4 bis 6) gemeinsam ausgleichen. Mit der gezeigten Anordnung der Laschen 4 und der Gelenkbuchsen 5 in Umfangsrichtung in Bezug auf die Mittelachse 6 hintereinander zwischen den sternförmig aufgefächerten Kupplungselementen 2, 3, kann eine kompakte Ausgleichskupplung 1 realisiert werden. Bei Drehung um die Mittelachse 6 übertragen die Kupplungselemente 2, 3 ein Drehmoment über die Wirkverbindung mit den biegeelastischen Laschen 4, die hierzu Zugkräfte in Umfangsrichtung um die Mittelachse 6 übertragen. Um eine möglichst große Verlagerung zu ermöglichen, sollte zwischen einer Lasche 4 und einem Kupplungselement 2, 3 jeweils eine Gelenkbuchse 5 angeordnet sein. So bilden die Gelenkbuchsen 5 jeweils die Verbindung der Laschen 4 zu den beiden Kupplungselementen 2, 3. Die Laschen 4 sind an ihren Enden jeweils mit einer elastischen Gelenkbuchsen 5 an die Kupplungselemente 2, 3 gekoppelt. Die Verlagerung der beiden Kupplungselemente 2, 3 zueinander wird daher im gezeigten Ausführungsbeispiel auf die biegeelastischen Lasche 4 und die beiden mit ihr hintereinander gekoppelten elastischen Gelenkbuchsen 5 aufgeteilt. Wie in Figur 1 zu erkennen, ist die vordere Gelenkbuchse 5 geschnitten dargestellt, um einen Einblick in das Innere der Gelenkbuchse 5 zu ermöglichen.

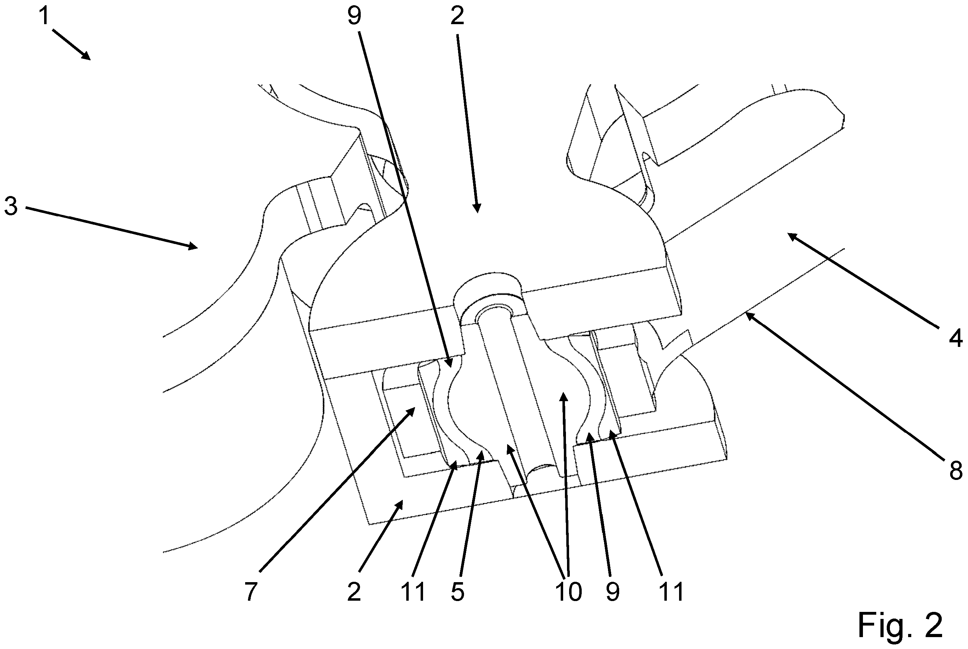

Die Figur 2 zeigt eine Detailansicht auf den in Figur 1 geschnitten dargestellten Bereich um die vordere Gelenkbuchse 5. Zu erkennen ist, dass die Gelenkbuchse 5 in eine Anschlussbuchse 7 der Lasche 4 integriert ist. Dies macht den Aufbau platzsparend und sorgt dafür, dass die Kräfte weniger umgeleitet werden müssen. Mit der Integration in die Anschlussbuchse 7 können zudem handelsübliche Gummibuchsen als Gelenkbuchse 5 verwendet werden. Aus Figur 2 ist auch erkennbar, dass die Gelenkbuchse 5 sphärisch geformt ausgebildet ist. Hierdurch kann die Verlagerung besonders gut zwischen den Gelenkbuchsen 5 und der biegeelastischen Lasche 4 aufgeteilt werden. Außerdem trägt die elastische Gelenkbuchse 5 zur Dämpfung bzw. zur Drehelastizität der Gesamtkupplung 1 bei. Die dauerhaft ertragbare, winklige Verlagerungsfähigkeit der Gelenkbuchse 5 sollte bei bis zu 1,5 Grad liegen. Die transiente, winklige Verlagerungsfähigkeit auch über 1,5 Grad. Die gezeigte Gelenkbuchse 5 ist als eine Gummibuchse ausgeführt. Hier ist ein Gummiteil 9 in vorzugsweise metallischen Lagerhülsen 10, 11 stoffschlüssig aufgenommen. Das Gummiteil 9 ist vorzugsweise an die metallischen Lagerhülsen 10, 11 anvulkanisiert. Hierdurch wird ein spielfreier Aufbau für die Gelenkbuchsen 5 erreicht. Die Verlagerung der Lagerhülsen 10, 11 zueinander erfolgt nur über eine elastische Verformung des zwischen den Lagerhülsen 10, 11 aufgenommenen Gummiteils 9. Die gummierte Verbindung zwischen den Lagerhülsen 10, 11 durch das dazwischen angeordnete Gummiteil 9 führt außerdem zu einer akustischen Entkopplung zwischen den Lagerhülsen 10, 11.

Damit können auch die Kupplungselemente 2, 3 der Kupplung 1 akustisch entkoppelt werden. Wie zu erkennen ist, weisen die Lagerhülsen 10, 11 und auch das dazwischen stoffschlüssig mit diesen verbundene Gummiteil 9 eine sphärische Gestalt auf. Bei einer Gummibuchse lässt sich durch Variation des Elastomers die winklige Steifigkeit der elastischen Gelenkbuchse 5 leicht einstellen. In den Figuren 1 und 2 ist eine Kupplung 1 mit Laschen 4 aus Federstahl oder faserverstärktem Kunststoff gezeigt. Die Laschen 4 weisen hier bevorzugt einen flachen Körper 8 zwischen den an den Enden des flachen Körpers angeordneten Anschlussbuchsen 7 auf.

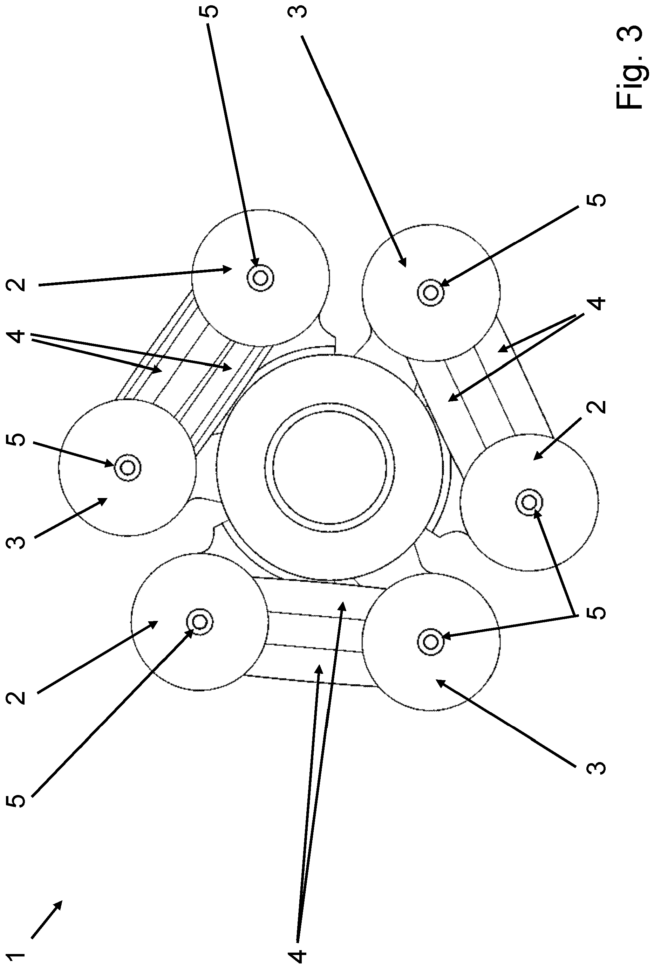

Die Figur 3 zeigt eine Draufsicht auf eine Kupplung 1, welche der Kupplung 1 gemäß der Figuren 1 und 2 entspricht, bis auf den Unterschied, dass die Laschen 4 hier als textilverstärkte und/oder fadenverstärkte Elastomerlaschen ausgebildet sind. Solche textilverstärkte und/oder fadenverstärkte Elastomerlaschen 4 lassen sich besonders gut nebeneinander anordnen, sodass zwischen den Gelenkbuchsen 5 leicht mehrere Laschen 4 angeordnet werden können.

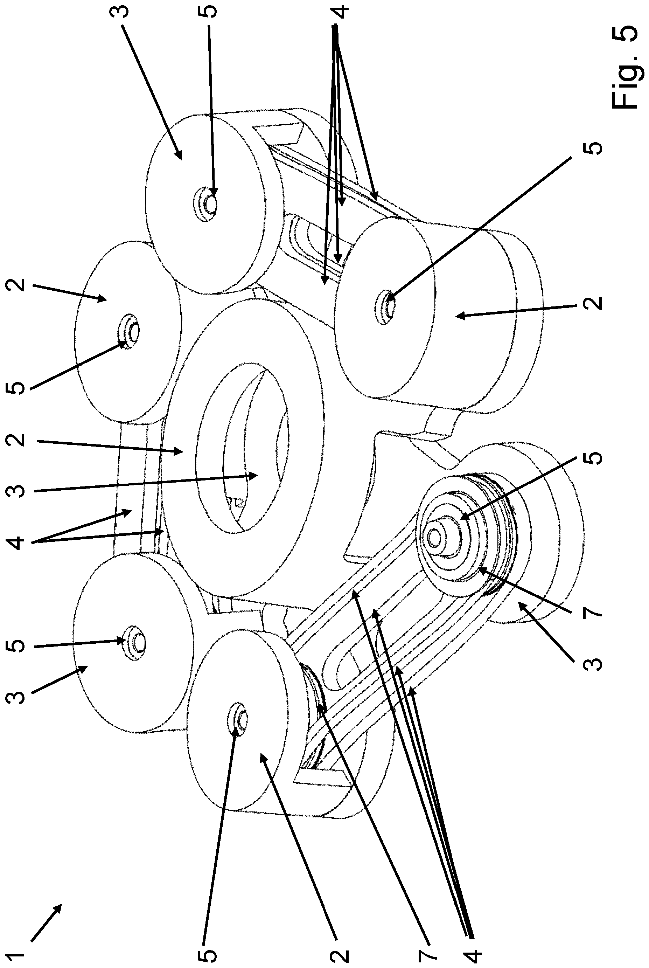

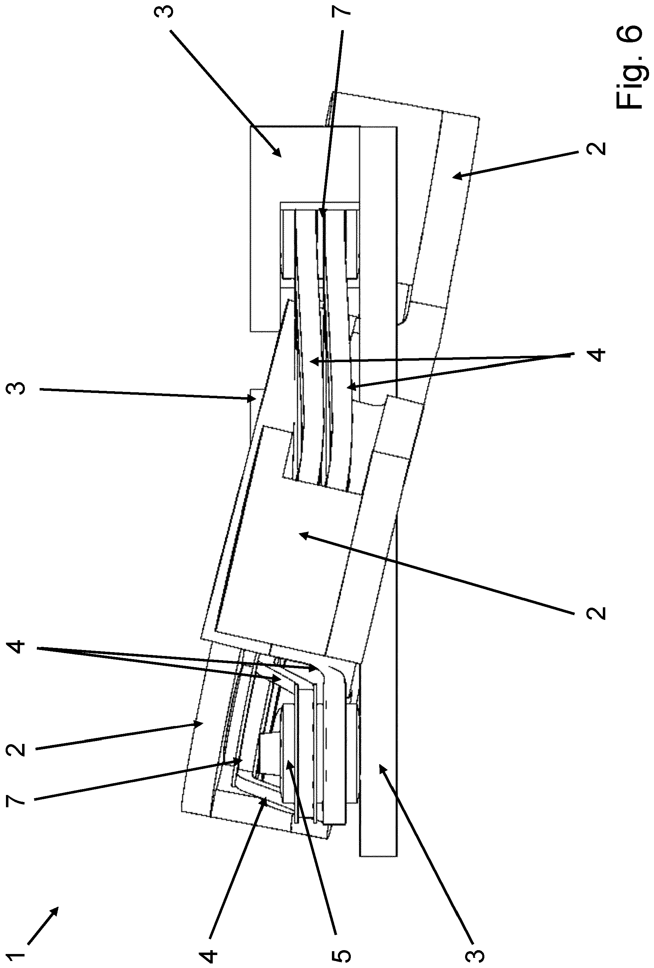

In Figur 4, welche eine Verlagerung der beiden Kupplungselement 2, 3 zueinander zeigt ist zu erkennen, dass zwischen den Gelenkbuchsen 5 zwei Laschen 4 angeordnet sind, die um die Anschlussbuchsen 7 gelegt sind, in welche die Gelenkbuchsen 5 integriert sind. Besonders durch die Verwendung von textilverstärkten und/oder fadenverstärkten Elastomerlaschen 4 lassen sich leicht mehrere dünnere und somit biegeweichere Laschen 4 parallel verwenden, statt relativ dicker und starrer Laschen. So kann bei gleichbleibender Drehmomentkapazität die Nachgiebigkeit der Konstruktion zusätzlich erhöht werden und somit Reaktionskräfte minimiert werden. Sowohl in Figur 4 als auch in den Figuren 5 und 6 sind die beiden Kupplungselement 2, 3 zueinander verlagert dargestellt, sodass beide Kupplungselemente 2, 3 eine von der Mittelachse 6 (Fig. 1) der Kupplung 1 verschiedene Ausrichtung einnehmen. Die Verlagerung der beiden Kupplungselemente 2, 3 zueinander wird auf die Laschen 4 und die Gelenkbuchsen 5 aufgeteilt. Neben der Gelenkbewegung der elastischen Gelenkbuchsen 5 ist deutlich zu erkennen, dass die biegeelastischen Laschen 4 zwischen den Kupplungselementen 2, 3 einen großen Teil der Verlagerung aufnehmen. Die dauerhaft ertragbare, winklige Verlagerungsfähigkeit durch die Laschen 4 sollte bei bis zu drei Grad liegen, wobei die transiente, winklige Verlagerungsfähigkeit durch die Laschen 4 bei über drei Grad liegen sollte. Erstrebenswert ist, dass die Verlagerung der beiden Kupplungselemente 2, 3 zueinander zu gleichen Teilen auf die Lasche 4 und die Gelenkbuchse 5 aufgeteilt wird. So ist die axiale Steifigkeit der Kupplung 1 annährend zu gleichen Teilen aus der winkligen Verlagerung der Buchse 5 und der Verformung der Lasche 4 gegeben. Auf diese Weise lässt sich die winkelige Steifigkeit über eine Variation der Materialien und Geometrien der Laschen 4 und Gelenkbuchsen 5 einstellen. Um die Lebensdauer der Kupplungskomponenten 4, 5 zu erhöhen, sollte die Aufteilung der Verlagerung der beiden Kupplungselemente 2, 3 zueinander hinsichtlich der einzelnen Lebensdauer optimiert auf die Lasche 4 und die Gelenkbuchse 5 erfolgen. Mit einer Aufteilung, die vorsieht, dass die Laschen 4 und die Gelenkbuchsen 5 der Kupplung 1 idealerweise gleichzeitig versagen, kann die Lebensdauer der Kupplungskomponenten 4, 5 insgesamt maximiert werden. Die Aufteilung in bestimmbare Anteile verhindert so ein vorzeitiges Versagen der biegeelastischen Laschen 4 und der elastischen Gelenkbuchsen 5, sodass die Gesamtlebensdauert der Kupplung 1 durch Abstimmung der Komponenten 4, 5 zur gemeinsamen Aufteilung der Verlagerung der beiden Kupplungselemente 2, 3 zueinander erhöht werden kann.

Zusammenfassend sei festgestellt, dass die vorgeschlagene drehmomentführende Kupplung 1, insbesondere auch in doppelkardanischer Ausführung, bei der zwei Kupplungen der in den Figuren gezeigten Art über ein Wellenstück miteinander verbunden in Serie zwischen Antrieb und Abtrieb geschaltet sind, eine besondere Eignung für Verlagerungsfälle aufweist, wie sie bei Schockbelastungen, also singulären Ereignissen mit extremen Verlagerungswerten, auftreten. Die Konstruktion zeigt eine geringe Drehelastizität sowie eine Gleichförmigkeit in der Drehmomentübertragung, die sowohl mit Laschen 4 aus Federstahl oder Kunststoff, aber auch mit Laschen 4 aus faserverstärktem Kunststoff oder textilverstärkten und/oder fadenverstärkten Elastomerlaschen realisierbar ist. Außerdem ist die vorgeschlagene Kupplungskonstruktion 1 spielfrei, was ein großer Vorteil im Falle von Wechsellasten ist. Mit den vorgeschlagenen Ausführungen lässt sich eine Kupplung 1 realisieren, die eine Druckfedersteife (C/T-Verhältnis) von 40 bis deutlich über 100 aufweist. Die dauerhaft ertragbare winklige Verlagerungsfähigkeit der vorgeschlagenen Kupplung 1 liegt bei bis zu fünf Grad. Die transiente, winklige Verlagerungsfähigkeit der Kupplung 1 kann auch bei deutlich über fünf Grad liegen.

### Bezugszeichenliste

- 1: Kupplung
- 2: erstes Kupplungselement (Antrieb)
- 3: zweites Kupplungselement (Abtrieb)
- 4: Lasche (Verbindungsstück)
- 5: Gelenkbuchse (Gummibuchse)
- 6: Mittelachse
- 7: Anschlussbuchse (Laschenauge)
- 8: flacher Körper
- 9: Gummiteil
- 10: Lagerhülse (innen)
- 11: Lagerhülse (außen)

## Patentansprüche

1. Kupplung (1) mit
- mindestens einem ersten Kupplungselement (2),
- mindestens einem zweiten Kupplungselement (3),
- mehreren Verbindungsstücken (4), und
- mehreren elastischen Gelenkbuchsen (5), wobei zur Verbindung der Kupplungselemente (2, 3) jeweils mindestens ein Verbindungsstück (4) und mindestens eine Gelenkbuchse (5) hintereinander gekoppelt zwischen den Kupplungselementen (2, 3) angeordnet sind, sodass mindestens eine Gelenkbuchse (5) ein elastisches Verbundlagerelement zwischen dem Verbindungsstück (4) und mindestens einem Kupplungselement (2, 3) bildet,
**dadurch gekennzeichnet,**
**dass** das Verbindungsstück (4) eine biegeelastische Lasche ist, wobei die Gelenkbuchse (5) und die Lasche (4) so ausgelegt sind, dass eine Verlagerung der beiden Kupplungselemente (2, 3) zueinander von der Lasche (4) und der Gelenkbuchse (5) aufgenommen wird.

2. Kupplung (1) nach Anspruch 1, **dadurch gekennzeichnet, dass** mindestens zwei Laschen (4) und mindestens zwei Gelenkbuchsen (5) hintereinander in Umfangsrichtung in vorbestimmten Winkelabständen in Bezug auf eine Mittelachse (6) der Kupplung (1) zwischen den Kupplungselementen (2, 3) angeordnet sind.

3. Kupplung (1) nach Anspruch 1 oder 2, **dadurch gekennzeichnet, dass** zwischen einer Lasche (4) und einem Kupplungselement (2, 3) jeweils eine Gelenkbuchse (5) angeordnet ist.

4. Kupplung (1) nach Anspruch 3, **dadurch gekennzeichnet, dass** zwischen den Gelenkbuchsen (5) mehrere Laschen (4) angeordnet sind.

5. Kupplung (1) nach einem der vorhergehenden Ansprüche,
**dadurch gekennzeichnet, dass** die Gelenkbuchse (5) sphärisch geformt ausgebildet ist.

6. Kupplung (1) nach einem der Ansprüche 1 bis 5, **dadurch gekennzeichnet, dass** die Gelenkbuchse (5) als sphärische Elastomerbuchse ausgebildet ist.

7. Kupplung (1) nach einem der Ansprüche 1 bis 6, **dadurch gekennzeichnet, dass** die Gelenkbuchse (5) ein elastisches, vorzugsweise gummielastisches, Gelenk bildet.

8. Kupplung (1) nach einem der vorhergehenden Ansprüche,
**dadurch gekennzeichnet, dass** die Gelenkbuchse (5) in eine Anschlussbuchse (7) der Lasche (4) integriert ist.

9. Kupplung (1) nach einem der Ansprüche 1 bis 7, **dadurch gekennzeichnet, dass** die Gelenkbuchse (5) über eine zapfenförmige Verbindung an eine Anschlussbuchse (7) der Lasche (4) angebunden ist.

10. Kupplung (1) nach einem der vorhergehenden Ansprüche, **dadurch gekennzeichnet, dass** die Lasche (4) aus Federstahl, Kunststoff, faserverstärktem Kunststoff oder als textilverstärkte und/oder fadenverstärkte Elastomerlasche ausgeführt ist.

11. Kupplung (1) nach einem der vorhergehenden Ansprüche,
**dadurch gekennzeichnet, dass** die Verlagerung der beiden Kupplungselemente (2, 3) zueinander eine elastische Verformung der Lasche (4) und der Gelenkbuchse (5) bewirkt.

12. Kupplung (1) nach einem der vorhergehenden Ansprüche,
**dadurch gekennzeichnet, dass** die Verlagerung der beiden Kupplungselemente (2, 3) zueinander von der Lasche (4) und der Gelenkbuchse (5) im Wesentlichen zu gleichen Teilen aufgenommen wird.

## Claims

1. Coupling (1) with
- at least a first coupling element (2),
- at least a second coupling element (3),
- several connecting pieces (4), and
- several elastic joint bushings (5), wherein at least one connecting piece (4) and at least one joint bushing (5) are arranged are arranged coupled one behind the other between the coupling elements (2, 3) in order to connect the coupling elements (2, 3), so that at least one joint bushing (5) forms an elastic composite bearing element between the connecting piece (4) and at least one coupling element (2, 3),
**characterized in**
**that** the connecting piece (4) is a bending elastic lug, wherein the joint bushing (5) and the lug (4) are designed such that a relocation of the two coupling elements (2, 3) in relation to one another is absorbed by the lug (4) and the joint bushing (5).

2. Coupling (1) according to claim 1, **characterized in that** at least two lugs (4) and at least two joint bushings (5) are arranged one behind the other in the circumferential direction at predetermined angular distances in relation to a central axis (6) of the coupling (1) between the coupling elements (2, 3).

3. Coupling (1) according to claim 1 or 2, **characterized in that** a respective joint bushing (5) is arranged between a lug (4) and a coupling element (2, 3).

4. Coupling (1) according to claim 3, **characterized in that** several lugs (4) are arranged between the joint bushings (5).

5. Coupling (1) according to any one of the preceding claims, **characterized in that** the joint bushing (5) is designed spherically shaped.

6. Coupling (1) according to any one claim 1 to 5, **characterized in that** the joint bushing (5) is designed as spherical elastomer bushing.

7. Coupling (1) according to any one of claims 1 to 6, **characterized in that** the joint bushing (5) forms an elastic, preferably rubber-elastic, joint.

8. Coupling (1) according to any one of the preceding claims, **characterized in that** the joint bushing (5) is integrated into a connection bushing (7) of the lug (4).

9. Coupling (1) according to any one of claims 1 to 7, **characterized in that** the joint bushing (5) is connected to a connection bushing (7) of the lug (4) via a pin-shaped connection.

10. Coupling (1) according to any one of the preceding claims, **characterized in that** the lug (4) is made of spring steel, plastic, fibre-reinforced plastic or as a textile-reinforced and/or thread-reinforced elastomer lug.

11. Coupling (1) according to any one of the preceding claims, **characterized in that** the relocation of the two coupling elements (2, 3) in relation to one another causes an elastic deformation of the lug (4) and the joint bushing (5).

12. Coupling (1) according to any one of the preceding claims, **characterized in that** the relocation of the two coupling elements (2, 3) in relation to one another is absorbed by the lug (4) and the joint bushing (5) in essentially equal parts.

## Revendications

1. Accouplement (1) avec
- au moins un premier élément d'accouplement (2),
- avec au moins un deuxième élément d'accouplement (3),
- plusieurs pièces des liaison (4), et
- plusieurs douilles d'articulation élastiques (5), dans lequel, pour relier les éléments d'accouplement (2, 3), au moins une pièce de liaison (4) et au moins une douille d'articulation (5) sont respectivement disposées, couplées l'une derrière l'autre, entre les éléments d'accouplement (2, 3), de sorte qu'au moins une douille d'articulation (5) forme un élément de palier composite élastique entre la pièce de liaison (4) et au moins un élément d'accouplement (2, 3),
**caractérisé,**
**en ce que** la pièce de liaison (4) est une patte élastique en flexion, dans lequel la douille d'articulation (5) et la patte (4) étant conçues de telle sorte qu'un déplacement des deux éléments d'accouplement (2, 3) l'un par rapport à l'autre est absorbé par la patte (4) et la douille d'articulation (5).

2. Accouplement (1) selon la revendication 1, **caractérisé en ce qu'**au moins deux pattes (4) et au moins deux douilles articulées (5) sont disposées l'une derrière l'autre dans la direction circonférentielle à des distances angulaires prédéterminées par rapport à un axe central (6) de l'accouplement (1) entre les éléments d'accouplement (2, 3).

3. Accouplement (1) selon la revendication 1 ou 2, **caractérisé en ce qu'**une douille d'articulation (5) est respectivement disposée entre une patte (4) et un élément d'accouplement (2, 3).

4. Accouplement (1) selon la revendication 3, **caractérisé en ce que** plusieurs pattes (4) sont disposées entre les douilles d'articulation (5).

5. Accouplement (1) selon l'une des revendications précédentes, **caractérisé en ce que** la douille d'articulation (5) est de forme sphérique.

6. Accouplement (1) selon l'une des revendications 1 à 5, **caractérisé en ce que** la douille d'articulation (5) est conçue comme une douille élastomère sphérique.

7. Accouplement (1) selon l'une des revendications 1 à 6, **caractérisé en ce que** la douille d'articulation (5) forme une articulation élastique, de préférence élastique en caoutchouc.

8. Accouplement (1) selon l'une des revendications précédentes, **caractérisé en ce que** la douille d'articulation (5) est intégrée dans une douille de raccordement (7) de la patte (4).

9. Accouplement (1) selon l'une des revendications 1 à 7, **caractérisé en ce que** la douille d'articulation (5) est reliée à une douille de connexion (7) de la patte (4) par une connexion en forme de tourillon.

10. Accouplement (1) selon l'une des revendications précédentes, **caractérisé en ce que** la patte (4) est réalisée en acier à ressort, en matière plastique, en matière plastique renforcée par des fibres ou sous forme de patte en élastomère renforcée par du textile et/ou renforcée par des fils.

11. Accouplement (1) selon l'une des revendications précédentes, **caractérisé en ce que** le déplacement des deux éléments d'accouplement (2, 3) l'un par rapport à l'autre provoque une déformation élastique de la patte (4) et de la douille articulée (5).

12. Accouplement (1) selon l'une des revendications précédentes, **caractérisé en ce que** le déplacement des deux éléments d'accouplement (2, 3) l'un par rapport à l'autre est absorbé sensiblement à parts égales par la patte (4) et la douille articulée (5).
